# EUROPEAN PATENT APPLICATION

(11) **EP 4 579 768 A1**
(43) Date of publication of application: **02.07.2025**
(21) Application number: 22960024.2
(22) Date of filing: 29.09.2022
(51) Int. Cl.: H01M 4/02, H01M 10/0525

(54) **ELECTROCHEMICAL DEVICE AND ELECTRONIC DEVICE**

(71) Applicant: Ningde Amperex Technology Limited, Ningde, Fujian 352100 (CN)
(72) Inventor: SUN, Zhenhe, Ningde, Fujian 352100 (CN); FU, Hongyan, Ningde, Fujian 352100 (CN)
(74) Representative: Icosa
(86) International application number: PCT/CN2022/122550
(87) International publication number: WO 2024/065386

(57) **Abstract**

This application provides an electrochemical apparatus and an electronic apparatus. With the use of the positive electrode current collector provided in this application, with an inactive material layer provided on a second surface of a single-sided region of the positive electrode current collector, and in conjunction with the electrolyte of this application, after the electrochemical apparatus has undergone charge-discharge cycles, the risks of abnormality in the positive electrode plate and lithium precipitation in the negative electrode plate are lowered, thereby lowering the risk of failure of the electrochemical apparatus during the charge-discharge cycles.

## Description

### TECHNICAL FIELD

This application relates to the field of electrochemical technologies, and in particular, to an electrochemical apparatus and an electronic apparatus.

### BACKGROUND

Most electrode assemblies in existing secondary batteries (such as lithium-ion batteries) have an exposed positive electrode current collector (usually aluminum foil), such as a wound structure ended with a current collector, a wound structure of a die-cut aluminum tab, or a stacked structure ended with a single-sided region of the positive electrode. With the continuous improvement of the voltage system of lithium-ion batteries, the ability of the positive electrode plate at full charge to oxidize the electrolyte is also enhanced. To lower the oxidation of the electrolyte by the positive electrode plate, the protection effect on the positive electrode plate and negative electrode plate under high voltage is generally enhanced in the prior art by continuously increasing the percentage of the fluorine-containing compound in the electrolyte.

However, fluorine-containing compounds such as fluorine-containing additives and fluorine-containing lithium salts are prone to defluorination reactions under the action of Lewis acids (such as PF₅) generated by electrolyte decomposition, resulting in HF. In this case, after the lithium-ion battery is injected with an electrolyte, the electrolyte comes into contact with the exposed positive electrode current collector, and the HF in the electrolyte and the positive electrode current collector are prone to reactions to generate impurities. The generated impurities diffuse inside the lithium-ion battery with the electrolyte and accumulate in a specific zone of the positive electrode plate (for example, a position at the edge of a positive electrode material layer disposed in a single-sided region of the positive electrode current collector), causing abnormalities in the positive electrode plate and affecting lithium precipitation in the negative electrode plate, thereby leading to the failure of the lithium-ion battery during charge-discharge cycles. In view of this, how to lower the risk of failure of lithium-ion batteries during charge-discharge cycles has become an urgent technical problem to be solved by those skilled in the art.

### SUMMARY

An objective of this application is to provide an electrochemical apparatus and an electronic apparatus, to lower the risk of failure of electrochemical apparatus during charge-discharge cycles.

It should be noted that in the invention content of this application, an example in which a lithium-ion battery is used as an electrochemical apparatus is used to illustrate this application. However, the electrochemical apparatus of this application is not limited to the lithium-ion battery. Specific technical solutions are as follows.

A first aspect of this application provides an electrochemical apparatus, including an electrode assembly, an electrolyte, and a packaging bag for accommodating the electrode assembly and the electrolyte. The electrolyte includes a fluorine-containing compound, the electrode assembly includes a positive electrode plate, a negative electrode plate, and a separator, the separator is disposed between the positive electrode plate and the negative electrode plate, and the electrode assembly is provided with the positive electrode plate, the negative electrode plate, and the separator stacked together. The positive electrode plate includes a positive electrode current collector, a positive electrode active material layer, and an inactive material layer. The positive electrode current collector is an aluminum foil and includes element silicon, and a mass percentage of element silicon in the positive electrode current collector is a%, with 0.03 ≤ a ≤ 0.13. The positive electrode current collector includes a first surface and a second surface opposite each other. The positive electrode current collector has a single-sided region. The single-sided region includes a first portion, and a second surface of the first portion is located on an outer surface of the electrode assembly. A first surface of the single-sided region is provided with the positive electrode active material layer, and a second surface of the single-sided region is provided with the inactive material layer. The inactive material layer includes an inactive material, and the inactive material includes at least one of an inorganic oxide or an elemental nonmetal. With the use of the positive electrode current collector provided in this application, with the inactive material layer provided on the second surface of the single-sided region of the positive electrode current collector, and in conjunction with the electrolyte of this application, after the electrochemical apparatus has undergone charge-discharge cycles, the risks of abnormality in the positive electrode plate and lithium precipitation in the negative electrode plate are lowered, thereby lowering the risk of failure of the electrochemical apparatus during the charge-discharge cycles.

In some embodiments of this application, the inactive material layer covers the second surface of the single-sided region. It can be understood that the inactive material layer is provided on the entire zone of the second surface of the single-sided region. In this way, the inactive material layer acts as an inert layer between the electrolyte and the positive electrode current collector to completely isolate the electrolyte from the positive electrode current collector, further lowering the possibility of contact between the electrolyte and the positive electrode current collector and further reducing the percentage of the by-products generated by reactions between the electrolyte and the positive electrode current collector. As a result, the risk of the by-products accumulating in a specific zone or another zone of the positive electrode plate is reduced. The risks of abnormality in the positive electrode plate and lithium precipitation in the negative electrode plate after the electrochemical apparatus has undergone charge-discharge cycles are lowered, thereby lowering the risk of failure of the electrochemical apparatus during the charge-discharge cycles.

In some embodiments of this application, the inorganic oxide includes at least one of aluminum trioxide, silicon oxide, calcium oxide, boehmite, or calcium carbonate. The elemental nonmetal includes at least one of silicon, carbon, or boron. The use of the foregoing types of inorganic oxides and elemental nonmetals lowers the risks of abnormality in the positive electrode plate and lithium precipitation in the negative electrode plate, thereby lowering the risk of failure of the electrochemical apparatus during the charge-discharge cycles.

In some embodiment of this application, Dv50 of the inorganic oxide particles is 0.1 µm to 30 µm, and Dv50 of the elemental nonmetal is 0.1 µm to 10 µm. The average particle sizes Dv50 of the inorganic oxide and elemental nonmetal being controlled within the foregoing ranges is more conducive to controlling the thickness of the inactive material layer to be within an appropriate range, and the risks of abnormality in the positive electrode plate and lithium precipitation in the negative electrode plate are lowered, thereby lowering the risk of failure of the electrochemical apparatus during the charge-discharge cycles.

In some embodiment of this application, the inactive material layer further includes an inactive material layer binder, and the inactive material layer binder includes at least one of polytetrafluoroethylene, chloroprene rubber, nitrile rubber, styrene-butadiene rubber, carboxylated rubber, chlorosulfonated polyethylene rubber, phenolic resin, epoxy resin, or silicone resin. A mass ratio of the inactive material to the inactive material layer binder is (70 to 98):(2 to 30). With the use of the foregoing binder and the mass ratio of the inactive material to the inactive material layer binder in the inactive material layer being controlled within the foregoing range, the risks of abnormality in the positive electrode plate and lithium precipitation in the negative electrode plate are lowered, thereby lowering the risk of failure of the electrochemical apparatus during the charge-discharge cycles.

In some embodiment of this application, the fluorine-containing compound includes a fluorine-containing additive, and a mass percentage of the fluorine-containing additive in the electrolyte is c%, with 0.1 ≤ c ≤ 40. With the fluorine-containing additive included in the electrolyte and the mass percentage of the fluorine-containing additive in the electrolyte being controlled within the foregoing range, the risk of abnormality in the positive electrode plate is lowered, thereby lowering the risk of failure of the electrochemical apparatus during the charge-discharge cycles.

In some embodiments of this application, a thickness of the inactive material layer is b µm, with 3 ≤ b ≤ 20. With the thickness of the inactive material layer being controlled within the foregoing range, the risks of abnormality in the positive electrode plate and lithium precipitation in the negative electrode plate are lowered, thereby lowering the risk of failure of the electrochemical apparatus during the charge-discharge cycles.

In some embodiments of this application, 3 ≤ b ≤ 10. This can make the inactive material layer have a suitable thickness to meet the need to lower the risk of failure of the electrochemical apparatus during the charge-discharge cycles and can also lower the influence of the inactive material layer on the energy density of the electrochemical apparatus. In addition, this can make the roll pressing device act on the inactive material layer in the roll pressing process after the electrode plate has been coated, lowering the risk of breakage of the positive electrode plate caused by the roll pressing device directly transitioning to the positive electrode current collector from the positive electrode active material layer.

In some embodiments of this application, 0.003 ≤ a/b ≤ 0.025. With the value of a/b being controlled within the foregoing range and the synergistic effect between the mass percentage of element silicon in the positive electrode current collector and the thickness of the inactive material layer, it is more conducive to lowering the risk of failure of the electrochemical apparatus during the charge-discharge cycles. In some embodiments of this application, 0.003 ≤ a/b ≤ 0.02. This can further lower the risk of failure of electrochemical apparatus during charge-discharge cycles.

In some embodiments of this application, 0.1 ≤ c/ b ≤ 13. With the value of c/b being controlled within the foregoing range and the synergistic effect between the mass percentage of the fluorine-containing additive in the electrolyte and the thickness of the inactive material layer, it is more conducive to lowering the risk of failure of the electrochemical apparatus during the charge-discharge cycles. In some embodiments of this application, 0.1 ≤ c/ b ≤ 6.7. This can further lower the risk of failure of electrochemical apparatus during charge-discharge cycles.

In some embodiments of this application, the fluorine-containing additive includes at least one of fluoroethylene carbonate, difluoromethyl ethylene carbonate, bis(difluoromethyl) ethylene carbonate, bis(trifluoromethyl) ethylene carbonate, bis(2-fluoroethyl) ethylene carbonate, bis(2,2-difluoroethyl) ethylene carbonate, bis(2,2,2-trifluoroethyl) ethylene carbonate, 2-fluoroethylmethylethylene carbonate, 2,2-difluoroethyl methyl ethylene carbonate, or 2,2,2-trifluoroethyl methyl ethylene carbonate. The use of the foregoing type of fluorine-containing additive is more conducive to weakening the ability of the positive electrode plate to oxidize the electrolyte and forming a uniform and dense protective film on surfaces of the positive electrode plate and negative electrode plate to protect the positive electrode plate and negative electrode plate.

In some embodiments of this application, the fluorine-containing substance includes a fluorine-containing lithium salt, and the fluorine-containing lithium salt includes at least one of lithium hexafluorophosphate, lithium difluorophosphate, lithium bis(trifluoromethanesulfonyl)imide, lithium bis(fluorosulfonyl)imide, lithium tetrafluoroborate, lithium difluoro(oxalato)borate, lithium hexafluoroantimonate, lithium hexafluoroarsenate, lithium perfluorobutanesulfonate, lithium bis(sulfonyl)imide, or lithium fluoride. The addition of the fluorine-containing lithium salt is more conducive to providing high ionic conductivity for faster lithium ion transport.

In some embodiments of this application, the electrode assembly has a stacked structure; or the electrode assembly has a wound structure, the positive electrode current collector further includes a double-sided region, and the double-sided region is sequentially connected to the single-sided region in a winding direction.

A second aspect of this application provides an electronic apparatus, including the electrochemical apparatus according to the first aspect of this application. Therefore, the electronic apparatus can provide the beneficial effects of the electrochemical apparatus according to the first aspect of this application.

Certainly, when any product or method of this application is implemented, all advantages described above are not necessarily demonstrated simultaneously.

### BRIEF DESCRIPTION OF DRAWINGS

To describe the technical solutions in some embodiments of this application and in the prior art more clearly, the following briefly describes the accompanying drawings required for describing some embodiments and the prior art. Apparently, the accompanying drawings in the following descriptions show only some embodiments of this application, and persons of ordinary skill in the art may still derive other drawings from these accompanying drawings.
FIG. 1 is a schematic structural diagram of an electrode assembly according to some embodiments of this application;
FIG. 2 is a schematic cross-sectional structural diagram of a positive electrode plate in the electrode assembly of FIG. 1 in an unwinding state in its thickness direction;
FIG. 3 is a schematic structural diagram of the positive electrode plate of FIG. 2 from a perspective of its thickness direction;
FIG. 4 is a schematic structural diagram of an electrode assembly according to some embodiments of this application;
FIG. 5 is a schematic cross-sectional structural diagram of a positive electrode plate in the electrode assembly of FIG. 4 in an unwinding state in its thickness direction;
FIG. 6 is a schematic structural diagram of a positive electrode plate according to an embodiment of this application; and
FIG. 7 is a schematic cross-sectional structural diagram of a positive electrode plate of Comparative example 1 in an unwinding state in its thickness direction.

### DETAILED DESCRIPTION

To make the objectives, technical solutions, and advantages of this application more comprehensible, the following describes this application in detail with reference to accompanying drawings and embodiments. Apparently, the described embodiments are merely some but not all of the embodiments of this application. All other embodiments obtained by persons of ordinary skill in the art based on some embodiments of this application shall fall within the protection scope of this application.

It should be noted that, in the specific embodiments of this application, an example in which a lithium-ion battery is used as an electrochemical apparatus is used to illustrate this application. However, the electrochemical apparatus of this application is not limited to the lithium-ion battery.

Most electrode assemblies in electrochemical apparatuses (such as lithium-ion batteries) have an exposed positive electrode current collector. The positive electrode current collector in the prior art usually uses aluminum foil with a mass percentage of element silicon being 0.06% to 0.18%, where element silicon is mostly present in the form of silicon dioxide or silicate. With the continuous improvement of the voltage system of electrochemical apparatuses, the ability of the positive electrode plate at full charge to oxidize the electrolyte is also enhanced. To lower the oxidation of the electrolyte by the positive electrode plate, the protection effect on the positive electrode plate and negative electrode plate under high voltage is generally enhanced in the prior art by continuously increasing the percentage of the fluorine-containing compound in the electrolyte.

However, fluorine-containing compounds such as fluorine-containing additives and fluorine-containing lithium salts are prone to defluorination reactions under the action of Lewis acids (such as PF₅) generated by electrolyte decomposition, resulting in HF. In this case, after the electrochemical apparatus is injected with an electrolyte, the electrolyte comes into contact with the exposed aluminum foil, and the HF in the electrolyte may react with the components in the aluminum foil such as silicon dioxide or silicate, generating by-products fluorosilicon compounds. The by-products fluorosilicon compounds diffuse inside the electrochemical apparatus and accumulate in a specific zone of the positive electrode plate (for example, a position at the edge of a positive electrode active material layer disposed in a single-sided region of the positive electrode current collector), causing abnormalities in the positive electrode plate (for example, noticeable color difference and increased percentage of element silicon in local zones). Normal lithium deintercalation cannot take place in the abnormal zone of the positive electrode plate, and lithium ions are released from edges of the abnormal zone of the positive electrode plate, resulting in lithium precipitation due to insufficient sites for lithium intercalation in the negative electrode plate corresponding to the edges of the abnormal zone and ultimately leading to failure of the electrochemical apparatus during the charge-discharge cycles. To solve problem of failure of electrochemical apparatuses during charge-discharge cycles, this application provides an electrochemical apparatus and an electronic apparatus.

A first aspect of this application provides an electrochemical apparatus, including an electrode assembly, an electrolyte, and a packaging bag for accommodating the electrode assembly and the electrolyte. The electrolyte includes a fluorine-containing compound, the electrode assembly includes a positive electrode plate, a negative electrode plate, and a separator, the separator is disposed between the positive electrode plate and the negative electrode plate, and the electrode assembly is provided with the positive electrode plate, the negative electrode plate, and the separator stacked together. The positive electrode plate includes a positive electrode current collector, a positive electrode active material layer, and an inactive material layer. The positive electrode current collector is an aluminum foil and includes element silicon, and a mass percentage of element silicon in the positive electrode current collector is a%, with 0.03 ≤ a ≤ 0.13. The positive electrode current collector includes a first surface and a second surface opposite each other. The positive electrode current collector includes element aluminum and element silicon, and a mass percentage of element silicon in the positive electrode current collector is a%, with 0.03 ≤ a ≤ 0.13. The positive electrode current collector has a single-sided region. The single-sided region is located at an end of the positive electrode current collector in its length direction, including a first portion, and a second surface of the first portion is located on an outer surface of the electrode assembly. A first surface of the single-sided region is provided with the positive electrode active material layer, and a second surface of the single-sided region is provided with the inactive material layer. The inactive material layer includes an inactive material, and the inactive material includes at least one of an inorganic oxide or an elemental nonmetal. The length direction of the positive electrode current collector is a winding direction of the wound electrode assembly.

It can be understood that the single-sided region is a section of the positive electrode current collector. Therefore, the first surface of the single-sided region is the first surface of the positive electrode current collector, and the second surface of the single-sided region is the second surface of the positive electrode current collector. The first portion is a section or all of the single-sided region, meaning that it is also a section of the positive electrode current collector. Therefore, the first surface of the first portion is the first surface of the positive electrode current collector and the second surface of the first portion is the second surface of the positive electrode current collector.

For example, a value of a is 0.03, 0.04, 0.05, 0.06, 0.07, 0.08, 0.09, 0.10, 0.11, 0.12, or 0.13, or any value between any two of the foregoing values. When the mass percentage of element silicon in the positive electrode current collector is too small, that is, when the value of a is less than 0.03, aluminum foil has insufficient strength and poor wear resistance, and the risk of breakage is likely to occur in cold pressing during the preparation of the positive electrode plate. When the mass percentage of element silicon in the positive electrode current collector is too large, that is, when the value of a is less than 0.13, the excessive strength of the positive electrode current collector leads to a decrease in its ductility, there is a risk of fracture of the positive electrode current collector during subsequent winding (for example, winding of the positive electrode current collector, winding of the positive electrode plate, and winding during the preparation of the electrode assembly); and the conductivity of the positive electrode current collector deteriorates. With the mass percentage of element silicon in the positive electrode current collector being controlled within the foregoing range, abnormalities in the preparation process of the positive electrode current collector can be reduced, the strength and toughness of the positive electrode current collector meet its preparation process requirements, and the positive electrode current collector has good conductivity.

The single-sided region includes a first portion, and a second surface of the first portion is located on an outer surface of the electrode assembly. An inactive material layer is provided on the second surface of the single-sided region to act as an inert layer between the electrolyte and the positive electrode current collector, physically isolating the electrolyte to lower the possibility of generation of by-products by reactions between the electrolyte and the positive electrode current collector and reduce the percentage of the by-products. This lowers the risk of the by-products accumulating in a specific zone or another zone of the positive electrode plate.

Generally speaking, with the use of the positive electrode current collector provided in this application, with an inactive material layer provided on a second surface of a single-sided region of the positive electrode current collector, and in conjunction with the electrolyte of this application, after the electrochemical apparatus has undergone charge-discharge cycles, the risks of abnormality in the positive electrode plate and lithium precipitation in the negative electrode plate are lowered, thereby reducing the risk of failure of the electrochemical apparatus during the charge-discharge cycles.

The type of aluminum foil is not particularly limited in this application and may be any well-known aluminum foil in the art, provided that the objectives of this application can be achieved.

The method of controlling the mass percentage of element silicon in the positive electrode current collector is not particularly limited in this application, provided that the objectives of this application can be achieved. For example, the controlling can be implemented by adjusting the ratio of individual components in the positive electrode current collector and the types of individual components.

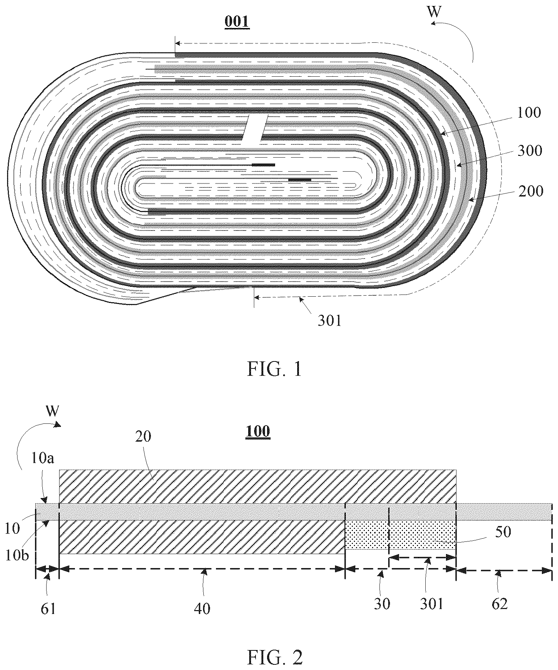

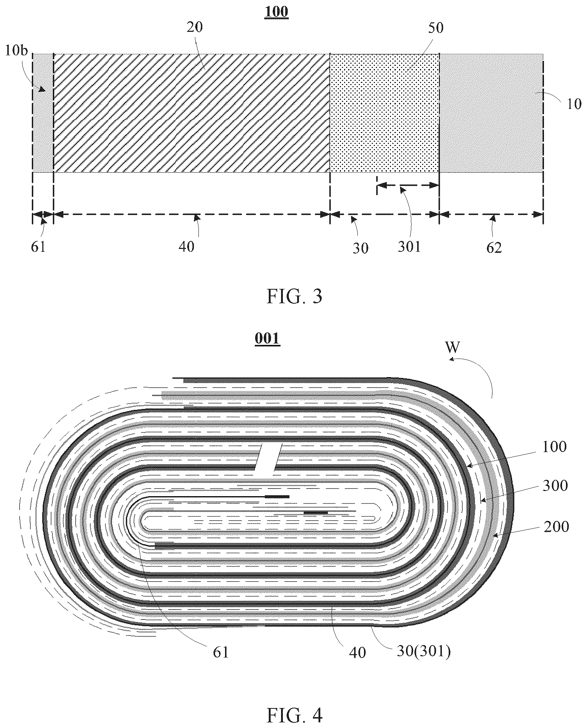

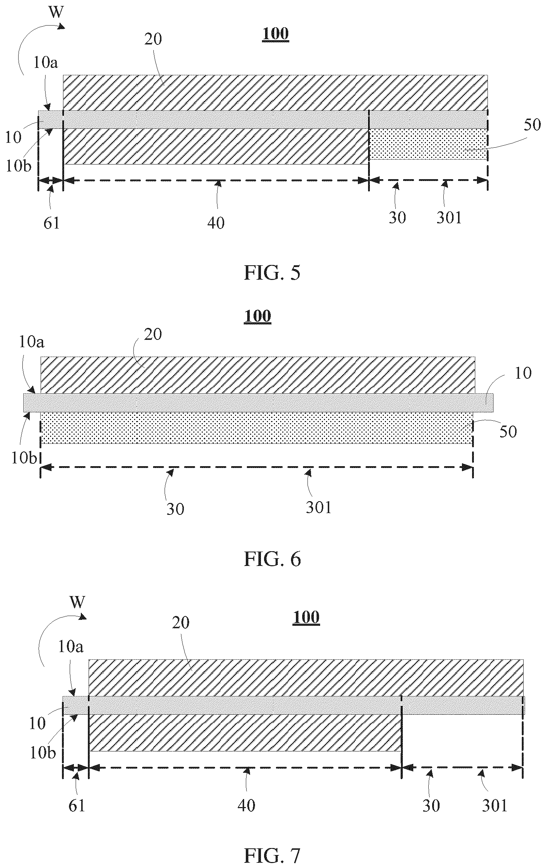

For example, in some embodiments of this application, as shown in FIG. 1 to FIG. 5, an electrode assembly 001 has a wound structure, with the winding direction indicated by W. The electrode assembly 001 includes a positive electrode plate 100, a negative electrode plate 200, and a separator 300 disposed between the positive electrode plate 100 and the negative electrode plate 200. The positive electrode plate 100 includes a positive electrode current collector 10, a positive electrode active material layer 20, and an inactive material layer 50. The positive electrode current collector 10 includes a first surface 10a and a second surface 10b opposite each other. The positive electrode current collector 10 includes a single-sided region 30. A first surface 10a of the single-sided region 30 is provided with the positive electrode active material layer 20, and a second surface 10b of the single-sided region 30 is provided with the inactive material layer 50. The single-sided region 30 includes a first portion 301, and a second surface 10b of the first portion 301 is located on an outer surface of the electrode assembly 001. As shown in FIG. 1 to FIG. 3, the positive electrode current collector 10 further includes a double-sided region 40, a first double-sided non-coated region 61, and a second double-sided non-coated region 62. Portions of the single-sided region 30 other than the first portion 301 are not located on the outer surface of the electrode assembly 001. The second surface 10b of the first portion 301 is located on the outer surface of the electrode assembly 001. The positive electrode current collector in the electrode assembly shown in FIG. 4 does not include the second double-sided non-coated region 62, but includes a double-sided region 40, a single-sided region 30, and a first double-sided non-coated region 61. As shown in FIG. 4 and FIG. 5, the first portion 301 can be understood as the single-sided region 30, and the second surface 10b of the first portion 301 can also be understood as the second surface 10b of the single-sided region 30, meaning that the second surface 10b of the single-sided region 30 is located on the outer surface of the electrode assembly 001.

For example, in some embodiments of this application, the electrode assembly has a stacked structure. The electrode assembly is composed of a positive electrode plate, a negative electrode plate, and a separator stacked together, and the separator is located between the positive electrode plate and the negative electrode plate. On both outermost sides of the electrode assembly in thickness direction, a single-sided positive electrode plate is provided. Specifically, as shown in FIG. 6, the single-sided positive electrode plate includes a positive electrode current collector 10. The positive electrode current collector 10 includes a first surface 10a and a second surface 10b opposite each other. The positive electrode current collector 10 includes a single-sided region 30. A first surface 10a of the single-sided region 30 is provided with the positive electrode active material layer 20, and a second surface 10b of the single-sided region 30 is provided with the inactive material layer 50. The single-sided region 30 includes a first portion 301, and a second surface 10b of the first portion 301 is located on an outer surface of the electrode assembly 001. The first portion 301 can be understood as the single-sided region 30, and the second surface 10b of the first portion 301 can also be understood as the second surface 10b of the single-sided region 30, meaning that the second surface 10b of the single-sided region 30 is located on the outer surface of the electrode assembly. Generally, the positive electrode plate not located on the outer surface of the electrode assembly is a double-sided positive electrode plate. The double-sided positive electrode plate includes a positive electrode current collector. The positive electrode current collector includes a first surface and a second surface opposite each other, and the first surface and the second surface are both provided with a positive electrode active material layer.

In some embodiments of this application, the inactive material layer covers the second surface of the single-sided region. It can be understood that the inactive material layer is provided on the entire zone of the second surface of the single-sided region. In this way, the inactive material layer acts as an inert layer between the electrolyte and the positive electrode current collector to completely isolate the electrolyte from the positive electrode current collector, further lowering the possibility of contact between the electrolyte and the positive electrode current collector and further reducing the percentage of the by-products generated by reactions between the electrolyte and the positive electrode current collector. As a result, the risk of the by-products accumulating in a specific zone or another zone of the positive electrode plate is reduced. The risks of abnormality in the positive electrode plate and lithium precipitation in the negative electrode plate after the electrochemical apparatus has undergone charge-discharge cycles are lowered, thereby lowering the risk of failure of the electrochemical apparatus during the charge-discharge cycles.

In some embodiments of this application, the inorganic oxide includes at least one of aluminum trioxide, silicon oxide, calcium oxide, boehmite, or calcium carbonate, and the elemental nonmetal includes at least one of silicon, carbon, or boron. The use of the foregoing types of inorganic oxides and elemental nonmetals is more conducive to exerting the inertness of the inactive material layer, physically isolating the electrolyte from the positive electrode current collector to lower the possibility of generation of by-products by reactions between the electrolyte and the positive electrode current collector and reduce the percentage of the by-products. As a result, the risk of the by-products accumulating in a specific zone or another zone of the positive electrode plate is reduced. Therefore, the risks of abnormality in the positive electrode plate and lithium precipitation in the negative electrode plate after the electrochemical apparatus has undergone charge-discharge cycles are lowered, thereby lowering the risk of failure of the electrochemical apparatus during the charge-discharge cycles.

The form of adding the elemental nonmetal in the inactive material layer is not particularly limited in this application, provided that the objectives of this application can be achieved. For example, silicon is added in the form of silicon powder, carbon is added in the form of conductive carbon, and boron is added in the form of elemental boron powder.

In some embodiment of this application, Dv50 of the inorganic oxide particles is 0.1 µm to 30 µm, and Dv50 of the elemental nonmetal is 0.1 µm to 10 µm. For example, Dv50 of the inorganic oxide is 0.1 µm, 1 µm, 5 µm, 10 µm, 15 µm, 20 µm, 25 µm, or 30 µm, or any value between any two of the foregoing values; and Dv50 of the elemental nonmetal is 0.1 µm, 1 µm, 5 µm, or 10 µm, or any value between any two of the foregoing values. With the average particle sizes Dv50 of the inorganic oxide and elemental nonmetal being controlled within the foregoing ranges, it is more conducive to controlling the thickness of the inactive material layer to be within an appropriate range, allowing the inactive material layer to physically isolate the electrolyte from the positive electrode current collector, in order to lower the possibility of generation of by-products by reactions between the electrolyte and the positive electrode current collector and reduce the percentage of the by-products. As a result, the risk of the by-products accumulating in a specific zone or another zone of the positive electrode plate is reduced. Therefore, the risks of abnormality in the positive electrode plate and lithium precipitation in the negative electrode plate after the electrochemical apparatus has undergone charge-discharge cycles are lowered, thereby lowering the risk of failure of the electrochemical apparatus during the charge-discharge cycles.

In this application, Dv50 represents a particle size of the inorganic oxide or elemental nonmetal at a cumulative volume of 50% in a volume-based particle size distribution as measured by starting from small particle sizes.

In some embodiment of this application, the inactive material layer further includes an inactive material layer binder, and the inactive material layer binder includes at least one of polytetrafluoroethylene, chloroprene rubber, nitrile rubber, styrene-butadiene rubber, carboxylated rubber, chlorosulfonated polyethylene rubber, phenolic resin, epoxy resin, or silicone resin. A mass ratio of the inactive material to the inactive material layer binder is (70 to 98):(2 to 30). For example, a mass ratio of the inactive material to the binder is 70:30, 75:25, 80:20, 85:15, 90:10, 95:5, or 98:2, or any value between any two of the foregoing values. With the use of the foregoing the inactive material layer binder and the mass ratio of the inactive material layer to the the inactive material layer binder in the inactive material layer being controlled within the foregoing range, it is more conducive to preparing an inactive material layer with excellent isolation effect to isolate the electrolyte from the positive electrode current collector, further lowering the possibility of contact between the electrolyte and the positive electrode current collector and further reducing the percentage of the by-products generated by reactions between the electrolyte and the positive electrode current collector. As a result, the risk of the by-products accumulating in a specific zone or another zone of the positive electrode plate is reduced. The risks of abnormality in the positive electrode plate and lithium precipitation in the negative electrode plate after the electrochemical apparatus has undergone charge-discharge cycles are lowered, thereby lowering the risk of failure of the electrochemical apparatus during the charge-discharge cycles.

In some embodiment of this application, the fluorine-containing compound includes a fluorine-containing additive, and a mass percentage of the fluorine-containing additive in the electrolyte is c%, with 0.1 ≤ c ≤ 40. For example, a value of c is 0.1, 2.0, 5.0, 10.0, 15.0, 20.0, 25.0, 30.0, 35.0, or 40.0, or any value between any two of the foregoing values. With the fluorine-containing additive included in the electrolyte and the mass percentage of the fluorine-containing additive in the electrolyte being controlled within the foregoing range, the protective ability of the electrolyte on the negative electrode plate can be enhanced, and a uniform and dense protective film can be formed on the surface of the negative electrode plate, thereby improving the cycling performance of the electrochemical apparatus while reducing the percentage of fluorinated silicon compounds generated by reactions between HF in the electrolyte and element silicon in the positive electrode current collector. In this way, the risk of abnormality in the positive electrode plate is lowered, thereby lowering the risk of failure of the electrochemical apparatus during the charge-discharge cycles.

In some embodiments of this application, a thickness of the inactive material layer is b µm, with 3 ≤ b ≤ 20. For example, a value of b is 3, 4, 6, 8, 10, 12, 14, 16, 18, or 20, or any value between any two of the foregoing values. With the thickness of the inactive material layer being controlled within the foregoing range and without increasing the volume of the electrochemical apparatus and affecting the energy density of the electrochemical apparatus, it is more conducive for the inactive material layer to act as an inert layer between the electrolyte and the positive electrode current collector to isolate the electrolyte from the positive electrode current collector, lowering the possibility of contact between the electrolyte and the positive electrode current collector and reducing the percentage of the by-products generated by reactions between the electrolyte and the positive electrode current collector. As a result, the risk of the by-products accumulating in a specific zone or another zone of the positive electrode plate is reduced. The risks of abnormality in the positive electrode plate and lithium precipitation in the negative electrode plate after the electrochemical apparatus has undergone charge-discharge cycles are lowered, thereby lowering the risk of failure of the electrochemical apparatus during the charge-discharge cycles. In some embodiments of this application, 3 ≤ b ≤ 10. This can make the inactive material layer have a suitable thickness to meet the need to lower the risk of failure of the electrochemical apparatus during the charge-discharge cycles and can also lower the influence of the inactive material layer on the energy density of the electrochemical apparatus. In addition, this can make the roll pressing device act on the inactive material layer in the roll pressing process after the electrode plate has been coated, lowering the risk of breakage of the positive electrode plate caused by the roll pressing device directly transitioning to the positive electrode current collector from the positive electrode active material layer.

The method of controlling the thickness of the inactive material layer is not particularly limited in this application, provided that the objectives of this application can be achieved. For example, this is implemented by controlling Dv50 of the inactive material or the coating weight of slurry on the inactive material layer.

In some embodiments of this application, 0.003 ≤ a/b ≤ 0.025. In some embodiments of this application, 0.003 ≤ a/b ≤ 0.02. For example, the value of a/ b is 0.003, 0.005, 0.01, 0.015, 0.02, or 0.025, or any value between any two of the foregoing values. With the value of a/b being controlled within the foregoing range and the synergistic effect between the mass percentage of element silicon in the positive electrode current collector and the thickness of the inactive material layer, the thickness of the inactive material allows the inactive material to fully exert its isolation effect, isolating the electrolyte from the positive electrode current collector without increasing the volume of the electrochemical apparatus and affecting the energy density of the electrochemical apparatus, so that the possibility of generation of by-products by reactions between the electrolyte and the positive electrode current collector is lowered, the percentage of the by-products is reduced, and the risk of by-products accumulating in a specific area or another area of the positive electrode plate is lowered. Therefore, this is more conducive to lowering the risk of failure of the electrochemical apparatus during the charge-discharge cycles.

In some embodiments of this application, 0.1 ≤ c/ b ≤ 13. In some embodiments of this application, 0.1 ≤ c/ b ≤ 6.7. For example, a value of c /b is 0.1, 1, 2, 3, 4, 5, 6, 7, 8, 9, 10, 11, 12, or 13, or any value between any two of the foregoing values. As an inert layer between the electrolyte and the positive electrode current collector, the inactive material layer can physically isolate the electrolyte. With the value of c/b being controlled within the foregoing range and the synergistic effect between the mass percentage of the fluorine-containing additive in the electrolyte and the thickness of the inactive material layer, the possibility of generation of by-products by reactions between the electrolyte and the positive electrode current collector can be further lowered to further reduce the percentage of the by-products, and the risk of by-products accumulating in a specific area or another area of the positive electrode plate is further lowered. Therefore, this is more conducive to lowering the risk of failure of the electrochemical apparatus during the charge-discharge cycles.

In some embodiments of this application, the fluorine-containing additive includes at least one of fluoroethylene carbonate (FEC), difluoromethyl ethylene carbonate (DFEC), bis(difluoromethyl) ethylene carbonate, bis(trifluoromethyl) ethylene carbonate, bis(2-fluoroethyl) ethylene carbonate, bis(2,2-difluoroethyl) ethylene carbonate, bis(2,2,2-trifluoroethyl) ethylene carbonate, 2-fluoroethylmethylethylene carbonate, 2,2-difluoroethyl methyl ethylene carbonate, or 2,2,2-trifluoroethyl methyl ethylene carbonate. The use of the foregoing type of fluorine-containing additive is more conducive to weakening the ability of the positive electrode plate to oxidize the electrolyte and forming a uniform and dense protective film on surfaces of the positive electrode plate and negative electrode plate to protect the positive electrode plate and negative electrode plate.

In some embodiments of this application, the fluorine-containing substance includes a fluorine-containing lithium salt, and the fluorine-containing lithium salt includes at least one of lithium hexafluorophosphate, lithium difluorophosphate (LiPF₂), lithium bis(trifluoromethanesulfonyl)imide (LiTFSI), lithium bis(fluorosulfonyl)imide (LiTSI), lithium tetrafluoroborate (LiBF₄), lithium difluoro(oxalato)borate (LiBF₂(C₂O₄), LiDFOB), lithium hexafluoroantimonate (LiSbF₆), lithium hexafluoroarsenate (LiAsF₆), lithium perfluorobutanesulfonate (LiC₄F₉SO₃), lithium bis(sulfonyl)imide (LiN(CₓF₂ₓ₊₁SO₂)(C_{y}F_{2y+1}SO₂), where x and y are positive integers and x ≤ 10, y ≤ 10) or lithium fluoride (LiF). The addition of the fluorine-containing lithium salt is more conducive to providing high ionic conductivity for faster lithium ion transport. Preferably, the fluorine-containing lithium salt includes at least one of LiPF₆, LiTFSI, or LiTSI, and this is more conducive to lowering the production cost of the electrochemical apparatus. The mass percentage of the fluorine-containing lithium salt in the electrolyte is not particularly limited in this application, provided that the objectives this application can be achieved. For example, the mass percentage of the fluorine-containing lithium salt in the electrolyte is 8% to 20%.

In some embodiments of this application, the electrode assembly has a stacked structure.

In some embodiments of this application, as shown in FIG. 1 and FIG. 2, the electrode assembly has a wound structure, the positive electrode current collector 10 further includes a double-sided region 40, and the double-sided region 40 is sequentially connected to the single-sided region 30 in a winding direction W. A positive electrode active material layer 20 is provided on both the first surface 10a and the second surface 10b of the double-sided region 40.

The thickness of the positive electrode current collector is not particularly limited in this application, provided that the objectives of this application can be achieved. For example, the thickness of the positive electrode current collector is 8 µm to 20 µm.

The preparation method of positive electrode current collector is not particularly limited in this application, and any well-known preparation method in the art can be used, provided that the objectives of this application can be achieved.

The compressed density of the cold pressed positive electrode plate and negative electrode plate is not particularly limited in this application, provided that the objectives of this application can be achieved. For example, the compacted density of the positive electrode plate and negative electrode plate after cold pressing is 3.9 g/cm³ to 4.3 g/cm³.

The positive electrode active material layer of this application includes a positive electrode active material. The type of the positive electrode active material is not particularly limited in this application, provided that the objectives of this application can be achieved. For example, the positive electrode active material may include at least one of lithium nickel cobalt manganate (such as common NCM811, NCM622, NCM523, NCM111), lithium nickel cobalt aluminate, lithium iron phosphate, lithium-rich manganese-based material, lithium cobaltate (LiCoO₂), lithium manganate, lithium iron manganese phosphate, lithium titanate, or the like. In this application, the positive electrode active material may further include a non-metal element, for example, fluorine, phosphorus, boron, chlorine, silicon, and sulfur. These elements can further improve the stability of the positive electrode active material. Optionally, the positive electrode active material layer further includes a conductive agent and a binder. The types of the conductive agent and binder in the positive electrode active material layer is not particularly limited in this application, provided that the objectives of this application can be achieved. The mass ratio of the positive electrode active material, conductive agent, and binder in the positive electrode active material layer is not particularly limited in this application, and persons skilled in the art can make selection based on actual needs, provided that the objectives of this application can be achieved. For example, the mass ratio of the positive electrode active material, conductive agent, and binder in the positive electrode active material layer is (97.5 to 97.9):(0.9 to 1.7):(1.0 to 2.0).

The thickness of the positive electrode active material layer is not particularly limited in this application, provided that the objectives of this application can be achieved. For example, the thickness of the positive electrode active material layer is 30 µm to 120 µm.

The negative electrode plate of this application includes a negative electrode current collector and a negative electrode active material layer disposed on at least one surface of the negative electrode current collector. The "negative electrode active material layer disposed on at least one surface of the negative electrode current collector" means that the negative electrode active material layer may be disposed on one surface of the negative electrode current collector in its thickness direction, or on two surfaces of the negative electrode current collector in its thickness direction. It should be noted that the "surface" herein may be an entire region or a partial region of the negative electrode current collector. This is not particularly limited in this application, provided that the objectives of this application can be achieved. The negative electrode current collector is not particularly limited in this application, provided that the objectives of this application can be achieved. For example, the negative electrode current collector may include copper foil, copper alloy foil, nickel foil, titanium foil, nickel foam, copper foam, or the like. The negative electrode active material layer includes a negative electrode active material. The type of the negative electrode active material is not particularly limited in this application, provided that the objectives of this application can be achieved. For example, the negative electrode active material may include at least one of natural graphite, artificial graphite, soft carbon, hard carbon, mesocarbon microbeads, tin-based materials, silicon-based materials, lithium titanate, transition metal nitrides, or natural flake graphite. Optionally, the negative electrode active material layer further includes at least one of a conductive agent, a stabilizer, or a binder. The types of the conductive agent, stabilizer, and binder in the negative electrode active material layer is not particularly limited in this application, provided that the objectives of this application can be achieved. The mass ratio of the negative electrode active material, conductive agent, stabilizer, and binder in the negative electrode active material layer is not particularly limited in this application, provided that the objectives of this application can be achieved. For example, the mass ratio of the negative electrode active material, conductive agent, stabilizer, and binder in the negative electrode active material layer is (97 to 98):(0.5 to 1.5):(0.5 to 1.5):(1.0 to 1.9).

Thicknesses of the negative electrode current collector and the negative electrode active material layer are not particularly limited in this application, provided that the objectives of this application can be achieved. For example, the thickness of the negative electrode current collector is 5 µm to 20 µm, and the thickness of the negative electrode active material layer is 30 µm to 120 µm.

The electrolyte of this application further includes a non-aqueous solvent. The non-aqueous solvent is not particularly limited in this application, provided that the objective of this application can be achieved. For example, the non-aqueous solvent may include but is not limited to at least one of dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), ethyl acetate, n-propyl acetate, tert-butyl acetate, methyl propionate, ethyl propionate, or propyl propionate.

The mass percentage of the non-aqueous solvent in the electrolyte is not particularly limited in this application, provided that the objectives of this application can be achieved. For example, the mass percentage of the non-aqueous solvent in the electrolyte is 70% to 99%.

The separator and packaging bag are not particularly limited in this application and may be any well-known separator and packaging bag in the art, provided that the objectives of this application can be achieved.

The electrochemical apparatus in this application is not particularly limited and may include any apparatus in which electrochemical reactions take place. In some embodiments, the electrochemical apparatus may include but is not limited to a lithium metal secondary battery, a lithium-ion secondary battery, a sodium-ion secondary battery, a lithium polymer secondary battery, or a lithium-ion polymer secondary battery.

The preparation method of electrochemical apparatus is not particularly limited in this application and may be any well-known preparation method in the art, provided that the objectives of this application can be achieved.

A second aspect of this application provides an electronic apparatus, including the electrochemical apparatus according to the first aspect of this application. Therefore, the electronic apparatus can provide the beneficial effects of the electrochemical apparatus according to the first aspect of this application.

The electronic apparatus of this application is not particularly limited and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a storage card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

### Example

In the following, examples and comparative examples are given to describe some embodiments of this application in more detail. Various tests and evaluations are performed in the following methods.

### Test methods and devices

### Detection of percentages of different elements

Lithium-ion batteries of each example and comparative example were taken, fully discharged, and then disassembled. For each battery, the positive electrode active material layer on the surface of the positive electrode current collector was washed away with N-methylpyrrolidone, and finally the positive electrode current collector was cleaned with DMC; and the cleaned positive electrode current collector was tested using an inductively coupled plasma spectrometer (ICP) to obtain percentages of element aluminum and element silicon.

### Detection of percentage of fluorine-containing additive

Lithium-ion batteries of each example and comparative example were taken and centrifuged to obtain 10 mL of electrolyte. With a gas chromatography detection method, the mass percentage of the fluorine-containing additive in the electrolyte can be obtained.

### Average particle size Dv50 test

Dv50 was measured with reference to the national standard GB/T 19077-2016 (Particle Size Distribution - Laser Diffraction Method) and using a laser particle size analyzer (such as Malvern Master Size 3000).

### Detection of abnormalities in positive electrode plate

Lithium-ion batteries of each example and comparative example were fully discharged and then disassembled. For each battery, the positive electrode plate was visually observed for abnormal appearance of a heterochromatic mark (also referred to as abnormal zone), that is, a significant color difference between a local zone and its surrounding zones. X-ray energy dispersive spectroscopy (EDS) testing was carried out on the positive electrode plate with the abnormal zone. If the percentage of element silicon in the abnormal zone was greater than 2wt%, the positive electrode plate was determined to have an abnormality. If the positive electrode plate did not exhibit abnormal appearance of a heterochromatic mark, indicating that there is no abnormal appearance on the positive electrode plate and no EDS testing was carried out on the positive electrode plate.

The existence of abnormal appearance in the positive electrode plate and the percentage of element silicon greater than 2wt% in the abnormal zone were used to characterize the problem of failure of the electrochemical apparatus during charge-discharge cycles.

### Determination of abnormalities in preparation process of positive electrode plate

In the <preparation of positive electrode plate> of each example or comparative example, during the cold pressing of the positive electrode plate, it was determined whether there is a fracture of the positive electrode current collector, breakage of the positive electrode plate, falling-off of the positive electrode active material layer, or significant fluctuation in the laser positioning of the positive electrode plate.

### Example 1-1

### <Preparation of positive electrode plate>

Inactive material inorganic oxide aluminum trioxide and inactive material layer binder polytetrafluoroethylene (average molecular weight 500,000) were mixed at a mass ratio of 70:30 to obtain an inactive material layer slurry. Dv50 of the inorganic oxide is 0.1 µm.

Positive electrode active material LiCoO₂, conductive agent conductive carbon black, and binder polyvinylidene difluoride (PVDF) were mixed at a mass ratio of 96:2:2, added with N-methylpyrrolidone (NMP), and stirred to uniformity under the action of a vacuum mixer to obtain a positive electrode slurry, where the solid content of the positive electrode slurry was 70wt%.

The positive electrode slurry was evenly applied to the first surfaces 10a of the double-sided region 40 and the single-sided region 30 of the positive electrode current collector 10 shown in FIG. 5, and then dried at 120°C for 1 hour. The foregoing steps was repeated on the second surface 10b of the double-sided region 40 of the positive electrode current collector 10, and an inactive material layer slurry was applied to the second surface 10b of the single-sided region 30 of the positive electrode current collector 10, so that the inactive material layer 50 covered the second surface 10b of the single-sided region 30, thereby obtaining the positive electrode plate as shown in FIG. 5. The positive electrode current collector was dried at 120°C for 1 hour, followed by cold pressing, cutting, and slitting to obtain positive electrode plates with dimensions of 78 mm × 875 mm. The dimensions of the first surface 10a of the double-sided region 40 were 78 mm × 780 mm, the dimensions of the first surface 10a of the single-sided region 30 were 78 mm × 80 mm, the same as the dimensions of the first surface 10a of the first portion 31, and the dimensions of the first non-coated region 61 were 78 mm × 15 mm. The thickness of the positive electrode active material layer 20 was 100 µm, the thickness b of the inactive material layer 50 was 3 µm, and the thickness of the positive electrode current collector 10 was 10 µm. The mass percentage of element silicon in the positive electrode current collector 10 was a% = 0.03%.

### <Preparation of negative electrode plate>

Negative electrode active material artificial graphite, binder styrene-butadiene rubber, and thickener sodium carboxymethylcellulose were mixed at a mass ratio of 97.4:1.4:1.2, added with deionized water, and stirred to uniformity under the action of a vacuum mixer to obtain a negative electrode slurry, where the solid content of the negative electrode slurry was 75wt%. The negative electrode slurry was evenly applied to one surface of the negative electrode current collector copper foil having a thickness of 12 µm and dried at 120°C for 1 hour to obtain a negative electrode having a negative electrode active material layer coated on a single surface, with a coating thickness of 130 µm. The foregoing steps were repeated on another surface of the negative electrode current collector to obtain a negative electrode plate with the negative electrode active material layer coated on two surfaces. The negative electrode current collector was dried at 120°C for 1 hour, followed by cold pressing, cutting, and slitting to obtain negative electrode plates with dimensions of 74 mm × 867 mm.

### <Preparation of electrolyte>

In an argon glove box with water content less than 10 ppm, EC, PC, and DEC were mixed at a mass ratio of 1:1:1 to obtain an organic solvent, then fluorine-containing lithium salt LiPF₆ was added to the organic solvent to obtain a base electrolyte. Fluorine-containing additive FEC was added to the base electrolyte to obtain an electrolyte. The mass percentage of the fluorine-containing lithium salt LiPF₆ in the electrolyte was 13.8%, and the mass percentage of the fluorine-containing additive FEC in the electrolyte was c%=38%.

### <Preparation of separator>

A porous polyethylene film with a thickness of 7 µm was used.

### <Preparation of lithium-ion battery>

The prepared positive electrode plate, separator, and negative electrode plate were stacked in sequence, with the separator positioned between the positive electrode plate and the negative electrode plate for separation, and wound to obtain an electrode assembly with a wound structure shown in FIG. 4. The electrode assembly was placed into an aluminum-plastic film packaging bag and dried, and then the electrolyte was injected, followed by processes such as vacuum sealing, standing, formation, degassing, and trimming, to obtain a lithium-ion battery.

### Examples 1-2 to 1-9

These examples were the same as Example 1-1 except that the related preparation parameters were adjusted according to Table 1.

### Example 2-1 to Example 2-6

These examples were the same as Example 1-1 except that the related preparation parameters were adjusted according to Table 2.

### Comparative example 1

This comparative example was the same as Example 1 except that in the <Preparation of positive electrode plate>, as shown in the positive electrode current collector 10 in FIG. 7, no inactive material layer was provided on the first portion of the positive electrode current collector, that is the second surface of the single-sided region, so that the prepared positive electrode plate was as shown in FIG. 7.

### Comparative examples 2 and 3

These comparative examples were the same as Example 1-1 except that the related preparation parameters were adjusted according to Table 1.

### Comparative example 4

This comparative example was the same as Comparative example 1 except that the related preparation parameters were adjusted according to Table 1.

The related preparation parameters and performance tests of each example and comparative example are shown in Tables 1 and 2.

**Table 1**

| | a (%) | Inactive material | Dv50 of inorganic oxide (µm) | Dv50 of elemental nonmetal (µm) | Inactive material layer binder | N | Abnormal appearance in positive electrode plate? | Percentage of Si in abnormal zone of positive electrode plate (wt%) | Abnormalities in preparation process of positive electrode plate? |
|---|---|---|---|---|---|---|---|---|---|
| Example 1-1 | 0.03 | Aluminum trioxide | 0.1 | \ | Polytetrafluoroethylene | 70:30 | No | - | Significant fluctuation in laser positioning |
| Example 1-2 | 0.06 | Aluminum trioxide | 0.1 | \ | Polytetrafluoroethylene | 70:30 | No | - | Significant fluctuation in laser positioning |
| Example 1-3 | 0.13 | Aluminum trioxide | 0.1 | \ | Polytetrafluoroethylene | 70:30 | No | - | Significant fluctuation in laser positioning |
| Example 1-4 | 0.06 | Aluminum trioxide + carbon black (mass ratio of 50:1) | 0.1 | 0.1 | Polytetrafluoroethylene | 70:30 | No | - | N/A |
| Example 1-5 | 0.06 | Aluminum trioxide | 10 | \ | Polytetrafluoroethylene | 70:30 | No | - | Significant fluctuation in laser positioning |
| Example 1-6 | 0.06 | Aluminum trioxide | 30 | \ | Polytetrafluoroethylene | 70:30 | No | - | Significant fluctuation in laser positioning |
| Example 1-7 | 0.06 | Aluminum trioxide + conductive carbon (mass ratio of 50:1) | 10 | 10 | Polytetrafluoroethylene | 70:30 | No | - | N/A |
| Example 1-8 | 0.06 | Aluminum trioxide + conductive carbon (mass ratio of 50:1) | 10 | 10 | Polytetrafluoroethylene | 85:15 | No | - | N/A |
| Example 1-9 | 0.06 | Aluminum trioxide + conductive carbon (mass ratio of 50:1) | 10 | 10 | Polytetrafluoroethylene | 98:2 | No | - | N/A |
| Comparative Example 1 | 0.06 | \ | \ | \ | \ | \ | Yes | 2.3 | N/A |
| Comparative Example 2 | 0.01 | Aluminum trioxide | 10 | \ | Polytetrafluoroethylene | 70:30 | No | - | Significant fluctuation in laser positioning and fracture in cold pressing |
| Comparative example 3 | 0.15 | Aluminum trioxide | 10 | \ | Polytetrafluoroethylene | 70:30 | Yes | 2.2 | Significant fluctuation in laser positioning |
| Comparative example 4 | 0.01 | \ | \ | \ | \ | \ | No | - | Fracture in cold pressing |

| | | | | | | | | | |
|---|---|---|---|---|---|---|---|---|---|
| Note: "N" in Table 1 represents the mass ratio of the inactive material to the inactive material layer binder; "\" in Table 1 indicates no corresponding parameter; and "-" in Table 1 indicates that there is no abnormality in the positive electrode plate, and there is no need to test the percentage of Si. | | | | | | | | | |

From Examples 1-1 to 1-9 and Comparative examples 1 to 4, it can be seen that with the use of the lithium-ion battery for which the positive electrode current collector has the mass percentage a% of element silicon in the positive electrode current collector within the range in this application and an inactive material layer is disposed on the second surface of the single-sided region of the positive electrode current collector, and in conjunction with the electrolyte of this application, after the lithium-ion battery has undergone charge-discharge cycles, there is no abnormal appearance on the positive electrode plate, indicating that the risk of failure of the lithium-ion battery during charge-discharge cycles is lowered, and there are no abnormalities in the preparation process of the positive electrode plate or only the problem of significant fluctuations in laser positioning, without affecting the use performance of the positive electrode plate. In Comparative examples 1 to 4, with the use of the lithium-ion battery without an inactive material layer provided on the second surface of the single-sided region of the positive electrode current collector and/or the mass percentage a% of element silicon in the positive electrode current collector not within the range in this application, an abnormal appearance is present on the positive electrode plate, the percentage of Si in the abnormal zone of the positive electrode plate is greater than 2wt%, and there are significant fluctuations in laser positioning and/or fracture in cold pressing, indicating that the risk of failure of the lithium-ion battery during the charge-discharge cycles has not been lowered.

The mass percentage a% of element silicon in the positive electrode current collector usually affects the probability of failure of the lithium-ion battery during the charge-discharge cycles. From Examples 1-1 to 1-3 and Comparative examples 2 and 3, it can be seen that with the use of the lithium-ion battery with a mass percentage a% of element silicon in the positive electrode current collector within the range in this application, there is no abnormal appearance on the positive electrode plate, indicating that the risk of failure of the lithium-ion battery during the charge-discharge cycles is lowered, and there is only the problem of significant fluctuations in laser positioning, without affecting the use performance of the positive electrode plate.

The type of the inactive material usually affects the probability of failure of the lithium-ion battery during the charge-discharge cycles. From Examples 1-2, 1-4, 1-5, and 1-7, it can be seen that with the use of the lithium-ion battery for which the type of inactive material is within the range in this application, there is no abnormal appearance on the positive electrode plate, indicating that the risk of failure of the lithium-ion battery during the charge-discharge cycles is lowered, and there are no abnormalities in the preparation process of the positive electrode plate or there is only the problem of significant fluctuations in laser positioning, without affecting the use performance of the positive electrode plate. In Examples 1-5 and 1-7, when an elemental nonmetal is used as the inactive material, especially carbon (added in the form of conductive carbon), no significant fluctuations in laser positioning occur in the preparation process of the positive electrode plate. In other words, in the continuous production process of the positive electrode plate, after the inactive material layer is applied to the surface of the positive electrode current collector, the laser accurately positions at the edge of the inactive material layer for coating and forming the positive electrode active material layer, thereby reducing fluctuations in a coating start position of the positive electrode active material layer. In this way, the process in the continuous production of the positive electrode plate can be simplified, lowering the cost of manual adjustment in the laser positioning of the positive electrode active material layer.

Dv50 of the inorganic oxide and Dv50 of the elemental nonmetal usually affect the probability of failure of the lithium-ion battery during the charge-discharge cycles. From Examples 1-2 and 1-5 to 1-7, it can be seen that with the use of the lithium-ion battery for which Dv50 of the inorganic oxide and Dv50 of the elemental nonmetal are within the ranges in this application, there is no abnormal appearance on the positive electrode plate, indicating that the risk of failure of the lithium-ion battery during the charge-discharge cycles is lowered, and there are no abnormalities in the preparation process of the positive electrode plate or there is only the problem of significant fluctuations in laser positioning, without affecting the use performance of the positive electrode plate.

The mass ratio of the inactive material to the inactive material layer binder usually affects the probability of failure of the lithium-ion battery during the charge-discharge cycles. From Examples 1-2, 1-8, and 1-9, it can be seen that with the use of the lithium-ion battery for which the mass ratio of the inactive material to the inactive material layer binder is within the range in this application, there is no abnormal appearance on the positive electrode plate, indicating that the risk of failure of the lithium-ion battery during the charge-discharge cycles is lowered, and there are no abnormalities in the preparation process of the positive electrode plate, without affecting the use performance of the positive electrode plate.

**Table 2**

| | a (%) | b (µm) | a/b | Fluorine-containing additive | c (%) | c/b | Abnormal appearance in positive electrode plate? | Percentage of Si in abnormal zone of positive electrode plate (wt%) | Abnormalities in preparation process of positive electrode plate? |
|---|---|---|---|---|---|---|---|---|---|
| Example 1-2 | 0.06 | 3 | 0.02 | FEC | 38 | 12.7 | No | - | N/A |
| Example 2-1 | 0.06 | 10 | 0.006 | FEC | 38 | 3.8 | No | - | N/A |
| Example 2-2 | 0.06 | 20 | 0.003 | FEC | 38 | 1.9 | No | - | N/A |
| Example 2-3 | 0.075 | 3 | 0.025 | FEC | 38 | 12.7 | Yes | 1.5 | N/A |
| Example 2-4 | 0.06 | 3 | 0.02 | FEC | 0.3 | 0.1 | No | - | N/A |
| Example 2-5 | 0.06 | 3 | 0.02 | FEC | 20 | 6.7 | No | - | N/A |
| Example 2-6 | 0.06 | 3 | 0.02 | DFEC | 38 | 12.7 | No | - | N/A |

| | | | | | | | | | |
|---|---|---|---|---|---|---|---|---|---|
| Note: "-" in Table 2 indicates that there is no abnormality in the positive electrode plate, and there is no need to test the Si content. | | | | | | | | | |

The thickness b of the inactive material layer usually affects the probability of failure of the lithium-ion battery during the charge-discharge cycles. From Examples 1-2, 2-1, and 2-2, it can be seen that with the use of the lithium-ion battery for which the thickness b of the inactive material layer is within the range in this application, there is no abnormal appearance on the positive electrode plate or there is an abnormal appearance on the positive electrode plate but the percentage of Si in the abnormal zone is less than 2wt%, indicating that the risk of failure of the lithium-ion battery during the charge-discharge cycles is lowered, and there are no abnormalities in the preparation process of the positive electrode plate.

The value of a/b usually affects the probability of failure of the lithium-ion battery during the charge-discharge cycles. From Examples 1-2 and 2-1 to 2-3, it can be seen that with the use of the lithium-ion battery for which the value of a/b is within the range in this application, there is no abnormal appearance on the positive electrode plate or there is an abnormal appearance on the positive electrode plate but the percentage of Si in the abnormal zone is less than 2wt%, indicating that the risk of failure of the lithium-ion battery during the charge-discharge cycles is lowered, and there are no abnormalities in the preparation process of the positive electrode plate.

The mass percentage c% of the fluorine-containing additive in the electrolyte usually affects the probability of failure of the lithium-ion battery during the charge-discharge cycles. From Examples 1-2, 2-4, and 2-5, it can be seen that with the use of the lithium-ion battery for which the mass percentage c% of the fluorine-containing additive in the electrolyte is within the range in this application, there is no abnormal appearance on the positive electrode plate or there is an abnormal appearance on the positive electrode plate but the percentage of Si in the abnormal zone is less than 2wt%, indicating that the risk of failure of the lithium-ion battery during the charge-discharge cycles is lowered, and there are no abnormalities in the preparation process of the positive electrode plate.

The type of fluorine-containing additive usually affects the probability of failure of the lithium-ion battery during the charge-discharge cycles. From Examples 1-2 and 2-6, it can be seen that with the use of the lithium-ion battery for which the type of fluorine-containing additive is within the range of this application, there is no abnormal appearance on the positive electrode plate or there is an abnormal appearance on the positive electrode plate but the percentage of Si in the abnormal zone is less than 2wt%, indicating that the risk of failure of the lithium-ion battery during the charge-discharge cycles is lowered, and there are no abnormalities in the preparation process of the positive electrode plate.

The foregoing descriptions are merely preferred examples of this application, and are not intended to limit this application. Any modifications, equivalent replacements, improvements, and the like made without departing from the spirit and principle of this application shall fall within the protection scope of this application.

## Claims

1. An electrochemical apparatus, comprising an electrode assembly, an electrolyte, and a packaging bag for accommodating the electrode assembly and the electrolyte, wherein the electrolyte comprises a fluorine-containing compound, the electrode assembly comprises a positive electrode plate, a negative electrode plate, and a separator, and the separator is disposed between the positive electrode plate and the negative electrode plate; wherein
the positive electrode plate comprises a positive electrode current collector, a positive electrode active material layer, and an inactive material layer, the positive electrode current collector is an aluminum foil and comprises element silicon, and a mass percentage of element silicon in the positive electrode current collector is a%, with 0.03 ≤ a ≤ 0.13; and wherein
the positive electrode current collector comprises a first surface and a second surface opposite each other; the positive electrode current collector has a single-sided region, the single-sided region comprises a first portion, a second surface of the first portion is located on an outer surface of the electrode assembly, a first surface of the single-sided region is provided with the positive electrode active material layer, and a second surface of the single-sided region is provided with the inactive material layer; the inactive material layer comprises an inactive material, and the inactive material comprises at least one of an inorganic oxide or an elemental nonmetal.

2. The electrochemical apparatus according to claim 1, wherein the inactive material layer covers the second surface of the single-sided region.

3. The electrochemical apparatus according to claim 1, wherein the inorganic oxide comprises at least one of aluminum trioxide, silicon oxide, calcium oxide, boehmite, or calcium carbonate; and/or
the elemental nonmetal comprises at least one of silicon, carbon, or boron.

4. The electrochemical apparatus according to claim 1, wherein Dv50 of the inorganic oxide is 0.1 µm to 30 µm, and/or Dv50 of the elemental nonmetal is 0.1 µm to 10 µm.

5. The electrochemical apparatus according to claim 1, wherein the inactive material layer further comprises an inactive material layer binder, and the inactive material layer binder comprises at least one of polytetrafluoroethylene, chloroprene rubber, nitrile rubber, styrene-butadiene rubber, carboxylated rubber, chlorosulfonated polyethylene rubber, phenolic resin, epoxy resin, or silicone resin; and
a mass ratio of the inactive material to the inactive material layer binder is (70 to 98):(2 to 30).

6. The electrochemical apparatus according to claim 1, wherein the fluorine-containing compound comprises a fluorine-containing additive, and a mass percentage of the fluorine-containing additive in the electrolyte is c%, with 0.1 ≤ c ≤ 40.0.

7. The electrochemical apparatus according to claim 6, wherein a thickness of the inactive material layer is b µm, with 3 ≤ b ≤ 20.

8. The electrochemical apparatus according to claim 7, wherein 3 ≤ b ≤ 10.

9. The electrochemical apparatus according to claim 7, wherein 0.003 ≤ a/b ≤ 0.025.

10. The electrochemical apparatus according to claim 7, wherein 0.003 ≤ a/b ≤ 0.02.

11. The electrochemical apparatus according to claim 7, wherein 0.1 ≤ c/b ≤ 13.

12. The electrochemical apparatus according to claim 7, wherein 0.1 ≤ c/b ≤ 6.7.

13. The electrochemical apparatus according to claim 6, wherein the fluorine-containing additive comprises at least one of fluoroethylene carbonate, difluoromethyl ethylene carbonate, bis(difluoromethyl) ethylene carbonate, bis(trifluoromethyl) ethylene carbonate, bis(2-fluoroethyl) ethylene carbonate, bis(2,2-difluoroethyl) ethylene carbonate, bis(2,2,2-trifluoroethyl) ethylene carbonate, 2-fluoroethylmethylethylene carbonate, 2,2-difluoroethyl methyl ethylene carbonate, or 2,2,2-trifluoroethyl methyl ethylene carbonate.

14. The electrochemical apparatus according to claim 1, wherein the fluorine-containing compound comprises a fluorine-containing lithium salt, and the fluorine-containing lithium salt comprises at least one of lithium hexafluorophosphate, lithium difluorophosphate, lithium bis(trifluoromethanesulfonyl)imide, lithium bis(fluorosulfonyl)imide, lithium tetrafluoroborate, lithium difluoro(oxalato)borate, lithium hexafluoroantimonate, lithium hexafluoroarsenate, lithium perfluorobutanesulfonate, lithium bis(sulfonyl)imide, or lithium fluoride.

15. The electrochemical apparatus according to claim 1, wherein the electrode assembly has a stacked structure; or,
the electrode assembly has a wound structure, the positive electrode current collector further comprises a double-sided region, and the double-sided region is sequentially connected to the single-sided region in a winding direction.

16. An electronic apparatus, comprising the electrochemical apparatus according to any one of claims 1 to 15.
